# EUROPEAN PATENT APPLICATION

(11) **EP 1 099 373 A1**
(43) Date of publication of application: **16.05.2001**
(21) Application number: 99203738.2
(22) Date of filing: 09.11.1999
(51) Int. Cl.: A01K 13/00, A61D 11/00, A01L 15/00

(54) **Device for cleaning and disinfecting the feet of cows**

(71) Applicant: Vink, Gerrit Jan, 6661 NG Elst (NL)
(72) Inventor: Vink, Gerrit Jan, 6661 NG Elst (NL)

(57) **Abstract**

A device for the automatic and simultaneous cleaning and disinfecting of cows' feet whilst the cows are in the automatic feeder or walk-through frame by way of a spraying system whereby the device is connected to the cow identification system on the automatic feeding box so that individual treatment is possible and whereby the device is equipped with a facility which cleans itself in a simple but effective way and which consumes little water.

## Description

This invention relates to a device for the automatic cleaning and disinfecting of cows' feet. Cows housed in a loafing-shed are constantly walking in urine and manure and consequently have to contend with foot diseases. These include foot-rot, Mortellaro and sores which occur mainly only by the back feet and which cause a major adverse effect on the production of milk and meat.

In order to treat these complaints and to avoid further infection a so-called disinfection trough is often placed in the passage-way in the shed. This large, shallow trough where the cows walk through is filled with a disinfectant. The disadvantages of this trough are that the cows' feet only come into brief contact with the disinfectant and, because they are not properly cleaned, a large amount of dirt remains on them. These areas on the cows' feet are not completely disinfected. Furthermore, the disinfectant trough is soon soiled again with manure and urine and consequently the effect of the disinfectant is soon lost.

Apart from these disinfectant troughs, disinfectant mats are also used. These large mats are made of absorbant material and filled with a solution of water and disinfectant. When the animals walk over the mat the feet come into contact with the solution. The purpose of this mat is similar to that of the disinfectant trough and also has the same disadvantages.

Years of research into innocuous methods less sensitive to pollution with urine and manure and which can therefore be successfully used in disinfectant troughs, have borne no positive results. To be effective it is essential to clean and disinfect the cows' feet with a solution of disinfectant and clean water and at the same time the device should ideally be able to clean itself in an easy way. This is because, not only do the animals pollute the trough by constantly dragging their feet through it, but also becuase they often defecate in it too.

The purpose of this invention is to provide a device which does not possess the afore-mentioned disadvantages but which achieves the desired goal.

Ideally animals would be treated in the milking parlour. However. experiments with spray and brush devices when the animals enter or leave the milking parlour have not come up to expectations. The cows arrive twice daily at the milking parlour but the problem with treating them there is the brief time available. Milking should take place as quickly as possible and would be affected if the cows were treated during milking time. Furthermore, treating them individually would not be feasible.

A solution to this problem would be to coax the cows to a particular place in the shed rather than in the milking parlour. The automatic feeding box is such a place where an animal could be lured and a place where it would remain for any reasonable length of time to enable treatment to be carried out. The feeding box is also accessible to animals throughout the entire day and in this way an individual and correct treatment of each animal would be possible. There is also a cow identification system available. In order to provide water, disinfectant and medicines efficiently, the correct treatment must be administered to each individual animal, irrespective of the nature and degree of infection, and not only the right programme for each animal must be adhered to but also the frequency of the treatment may differ per animal, for example: every time the animal visits the automatic feeder, once a day or once a week.

This is made possible because the automatic feeding box is equipped with a cow identification system. This system identifies the cow and supplies it with the correct amounts of different sorts of feed in varying portions spread out over the day. By coupling this cow identification system already present in the cow-shed to a programmable regulator unit on the foot disinfecting device, it would be possible to treat each animal in the con-ect way. The cow identification system can be easily programmed so that it not only drives the automatic feeder but also the regulator unit on the disinfecting device.

Simultaneously, it is possible to treat the animals in a so-called walk-through feeding pen where they walk through and for a brief time are held by way of an automatic opening and closing front and back gate. This walk-through feeding pen can be placed in various places in the cow-shed. For example, a buffer area could be created at the back of the cow-shed and the pen could be placed between the milking parlour and the area where the animals subsequently are fed. or between this area and the area where the animals go to lie. The animals must go through the walk-through pen in order to reach the next area and are held for a brief time there in order to be treated. If a walk-through pen as described above is used the procedure works as follows:
A cow walks into the pen; an electric eye registers the cow; the back gate is shut. Now the rinsing and disinfecting programme starts up and at the same time the udders are sprayed with a disinfectant. Then the front gate opens, the cow leaves the box, the front gate closes and the back gate opens again. The whole process lasts about 30 seconds.

The foot disinfectant device is placed in the stand of the automatic feeder or walk-through pen where the cow places its back feet when she goes to eat, it consists of a shallow trough which slopes into a deeper section on the side of the same trough. The dimensions of the trough make allowance for the biggest and smallest cows. A hinged grid has been attached to the back of the trough. This grid has a closed mid section with inclined outer side walls. In the deeper section of the trough two centrifugal pumps are coupled to a spraying system by way of a pipe system. This spraying system consists of four sprayers, one on each corner of the grid and when the system is in action they spray liquid at the two strips on the grid where the cow places her back feet and ensure that both the fronts and backs of the back feet are treated.

In order to clean the device the following has been provided:
A sieve has been mounted under the grid where the larger pieces of waste remain. When the water is changed, the grid with the sieve, turning on the hinge at the back, is brought into an almost vertical positon by a cilinder. Any dirt in the sieve and any manure on the closed mid section of the grid slide downwards and are then rinsed away and the centrifugal pumps pump the rinsing solution from the trough by way of the sprayers.

The afore-mentioned pumps are driven in the opposite direction for the duration of a few seconds after each time they have been engaged so that any waste collected in the pump can be removed and blockages prevented. The pumps are connected with a programmable regulator unit capable of carrying out various rinsing and disinfecting programmes. Operation of the device can be further illustrated by the following design and construction examples and complementary drawings.

### Fig. 1

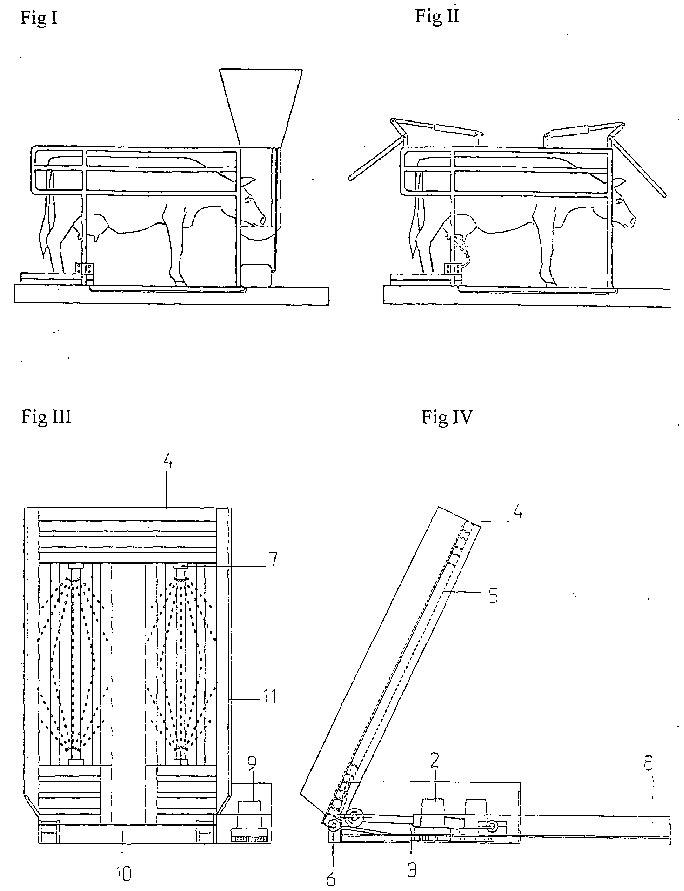

The cow walks into the feeding pen (1) to feed. When the animal actually receives food and therefore will remain there for some time, the pen gives a signal through to the regulator unit. The pumps (2) which are now responsible for spraying, are put into action. This ensures the cow's feet are cleaned and disinfected both at the front and back. After about a number of ten cows have visited the frame, the trough is emptied of by now soiled spraying solution and rinses itself out. to do this the cylinder (3) pushes the grid (4) and the sieve (5) mounted onto the hinged construction (6) into an almost vertical position (fig. 3 and 4) so that any dirt present on the sieve and manure in the closed mid section (10) on the grid slide downwards. Following this the centrifugal pumps (2) pump away the rinsing water out of the trough by way of the sprayers (7). This occurs in such a way that the rinsing water gets rid of both the waste on the sieve as well as the waste in the central gutter. Afterwards the grid with sieve returns to a horizontal position. By way of a valve connected to the water supply, the apparatus takes in a fresh supply of water. Following this a dosage pump adds medicine or disinfectant to the water.

This is just an example of a rinsing programme. Many of the possible rinsing methods are dependant on the products which are still to be developed. However. the apparatus related to this invention offers every possibility of application.

As well as the previously described method of treatment it is also possible to spray the cows' udders when they walk through the feeding pen with the aim of preventing udder disease. Automatic spraying is possible as the animals are enclosed in the pen in such a way that the position of the udders is easy to determine.

## Claims

1. A device having the purpose of treating cows' feet against diseases such as foot-rot and Mortellaro, of preventing and curing the same with the characteristic that in this case it relates to a combined mechanical device able of performing two treatments at the same time, i.e. the automatic cleaning of cows' feet and the automatic treatment of cows' feet with disinfectant as well as medicines.

2. A device as described above with the characteristic that this is situated in a place where a cow will willingly separate itself from the others in the loafing-shed for a longer or shorter period of time without the need for human intervention . This could be the automatic feeding box or walk-through pen (fig. 1 and 2) so that any individual treatment can be applied undisturbed for the required time and with the characteristic that this device can be coupled to an existing electronic cow-identificaiton system which engages the regulator unit on the device in such a way that the duration and frequency of treatment can be automatically adjusted to the needs of each individual cow.

3. A device having the purpose of automatically spraying udders with a disinfectant after milking in order to prevent infection of the same and having the chartacteristic that this be situated in the feeding- or walk-through pen as described in conclusion 2 so that the feet and udders can be simultaneously cleand and/or disinfected (fig. 2).

4. A device as described in conclusion 1. with the characteristic that it consists of a shallow trough (8) which slopes into a deeper section (9) whilst a grid (4) has been placed on the tray equipped at the back with a hinged construction (6). This grid has a closed mid section (10) and external slanting upright sides (11) having two centrifugal pumps (2) mounted on the deeper section of the tray (9) which in turn are coupled to sprayers (7) via a hose and pipe construction attached to the grid (4) in such a way that the liquid is sprayed from 4 sprayers (7), one at each corner of the grid, in both directions along the entire length of the two strips on both sides of the grid so that both the front and back of the cow's back legs are washed.

5. A device as described above but which provides the facility that each time the pumps (2) are put into action, they are driven for a few seconds in the opposite direction so that any dirt which may have collected there can be removed, preventing in this way any blockages of the pumps.

6. A device as described in conclusion 5. with the characteristic that a sieve (5) is attached under the grid (4) where larger pieces of dirt remain and, whilst the water is being changed. this grid with the sieve attached underneath turns on the hinge at the back (6) and is brought into an almost vertical position by a cylinder (3) so that any dirt present on the seive (5) and manure on the closed mid section (10) of the grid slide downwards. After this the centrifugal pumps (2) pump the rinsing liquid out of the tray by way of the sprayers (7) so that the rinsing liquid gets rid of both the waste present on the sieve and in the central gutter.

## Amended claims

### Amended claims in accordance with Rule 86(2) EPC.

**1.** A device having the purpose of treating cows' feet against diseases such as foot-rot and Mortellaro, of preventing and curing the same with the characteristic that this is situated in a place where a cow will willingly separate itself from the others in the loafing-shed for a longer or shorter period of time without the need for human intervention . This could be the automatic feeding box or walk-through pen (fig. 1 and 2) so that any individual treatment can be applied undisturbed for the required time and with the characteristic that this device can be coupled to an existing electronic cow-identificaiton system which engages the regulator unit on the device in such a way that the duration and frequency of treatment can bc automatically adjusted to the needs of each individual cow.

**2.** A device as described in conclusion 1, with the characteristic that it consists of a shallow trough (8) which slopes into a deeper section (9) whilst a grid (4) has been placed on the tray equipped at the back with a hinged construction (6). This grid has a closed mid section (10) and external slanting upright sides (11) having two centrifugal pumps (2) mounted on the deeper section of the tray (9) which in turn are coupled to sprayers (7) via a hose and pipe construction attached to the grid (4) in such a way that the liquid is sprayed from 4 sprayers (7), one at each corner of the grid, in both directions along the entire length of the two strips on both sides of the grid so that both the front and back of the cow's back legs are washed.

**3.** A device as described above but which provides the facility that each time the pumps (2) are put into action, they are driven for a few seconds in the opposite direction so that any dirt which may have collected there can be removed, preventing in this way any blockages of the pumps.

**4.** A device as described in conclusion 3, with the characteristic that a sieve (5) is attached under the grid (4) where larger pieces of dirt remain and, whilst the water is being changed, this grid with the sieve attached underneath turns on the hinge at the back (6) and is brought . into an almost vertical position by a cylinder (3) so_that any dirt present on the seive (5) and manure on the closed mid section (10) of the grid slide downwards. After this the centrifugal pumps (2) pump the rinsing liquid out of the tray by way of the sprayers (7) so that the rinsing liquid gets rid of both the waste present on the sieve and in the central gutter.
